# FASCICULE DE BREVET EUROPEEN

(11) **EP 1 304 836 B1**
(45) Date de publication et mention de la délivrance du brevet: **13.05.2009**
(21) Numéro de dépôt: 02292348.6
(22) Date de dépôt: 25.09.2002
(51) Int. Cl.: H04L 12/40, H04L 12/417

(54) **Bus de terrain déterministe et procédé de gestion d'un tel bus**
Deterministisches Feldbus und Verwaltungsverfahren dafür
Deterministic field bus and management method thereof

(30) Priorité: 27.09.2001 FR 0112427
(43) Date de publication de la demande: 23.04.2003
(73) Titulaire: AIRBUS France, 31060 Toulouse Cedex 03 (FR)
(72) Inventeur: Fleury, Christophe, 31340 Vacqieures (FR)
(74) Mandataire: Ilgart, Jean-Christophe

(56) Documents cités:
- EP-A- 1 069 733
- US-A- 6 111 888

## Description

### Domaine technique

La présente invention concerne un bus de terrain déterministe et un procédé de gestion d'un tel bus, notamment dans le domaine avionique.

### Etat de la technique antérieure

Le bus CAN ("Controller Area Network"), tel que défini dans les documents référencés [1] et [2] en fin de description, fait partie de la famille des bus de terrain. C'est un bus asynchrone, dont le débit peut aller jusqu'à 1 Mb/s avec une couche physique non définie par la norme. Plusieurs média peuvent donc être utilisés : support filaire, support optique, support électromagnétique. Ces normes ISO (International Standard Organisation) décrivent le bus CAN comme étant un protocole de communication série qui supporte de façon efficiente la distribution de commandes en temps réel avec un haut niveau de sécurité. Ses domaines de prédilection couvrent généralement les applications de réseaux à haut débit, haute fiabilité de transmission et à concept de câblage multiplexé bas coût.

Afin d'assurer une bonne élasticité au système, le concept de bus CAN offre un principe d'adressage non plus basé sur des adresses de source et de destination mais basé sur le contenu du message lui-même. En effet, la transmission de messages se fait par diffusion ("broadcast") c'est-à-dire qu'un message émis par une station est transmis à toutes les autres stations du réseau. Ensuite, le traitement de sélection du message transmis est effectué par un filtrage dit "d'acceptance" à bord de chaque station.

Dans le but d'assurer une grande qualité et sécurité de transmission, de nombreux dispositifs de signalisation, de détection d'erreurs ont été mis au point : acquittement, présence d'un CRC ("Cyclic Redundancy Code"), technique de bit "stuffing"... De plus, pour satisfaire des applications dites "temps réel", le principe CSMA/CD + AMP ("Carrier Sense Multiple Access / Collision Detection + Arbitration on Message Priority") a été retenu pour résoudre les conflits d'accès au médium. Ce dispositif fonctionne à l'aide d'une contention réalisée au niveau du bit lui-même. Autrement dit, la gestion de conflit d'accès au bus est effectuée pendant la durée du bit.

La compatibilité entre équipements hétérogènes est assurée par la définition de normes d'interconnexions qui définissent le comportement de chaque équipement vis à vis des autres. L'architecture de bus normalisée, plus connue sous le terme de modèle OSI, peut s'appliquer à toutes les catégories de bus. En fonction du type de bus, certaines couches sont libres et ne sont donc pas spécifiées. Dans les bus de terrain, les couches 3 à 6 sont libres. Ce modèle de référence définit 7 couches précisant pour chacune d'elles, les fonctionnalités du service rendu :

| N° de la couche | Modèle ISO/OSI |
|---|---|
| 7 | Application |
| 6 | Présentation |
| 5 | Session |
| 4 | Transport |
| 3 | Réseau |
| 2 | Communication de données |
| 1 | Couche physique |

La couche 7 définit les mécanismes communs aux applications réparties et la signification des informations échangées. La couche 6 se préoccupe de la syntaxe des informations échangées : messages, documents, fichiers... La couche 5 offre les moyens d'organiser et de synchroniser le dialogue entre abonnés. La couche 4 fournit les moyens de transport d'informations d'un bout à l'autre d'un bus entre deux utilisateurs. Elle sert d'intermédiaire entre les couches orientées traitement (couches 5,6,7) et celles orientées communication (couches 1,2,3). La couche 3 assure le transfert de blocs de données (paquets) entre deux abonnés. La couche 2 permet le transfert fiable d'informations entre systèmes adjacents (directement connectés). La couche 1 assure la transmission des bits d'un bloc de données et spécifie les règles mécaniques, électriques et les protocoles d'échange des bits ; elle offre les moyens d'établir une connexion physique entre deux équipements.

Ces couches communiquent avec les couches équivalentes des autres équipements au travers de protocoles normalisés. A l'intérieur d'un même équipement, les couches communiquent avec leurs voisines immédiates par l'intermédiaire d'interfaces matériels ou logiciels.

Le protocole CAN ne couvre que la totalité de la couche 2 et une grande partie de la première des sept couches du modèle ISO/OSI.

Sur le bus CAN il existe un mécanisme d'arbitrage : Si, lorsque le bus est libre, deux ou plusieurs unités démarrent simultanément, ceci crée un conflit de bus qui est résolu par un arbitrage bit à bit non destructif tout au long du contenu de l'identifier (principe CSMA/CD + AMP). Ce mécanisme d'arbitrage garantit qu'il n'y aura ni perte de temps, ni perte d'informations.

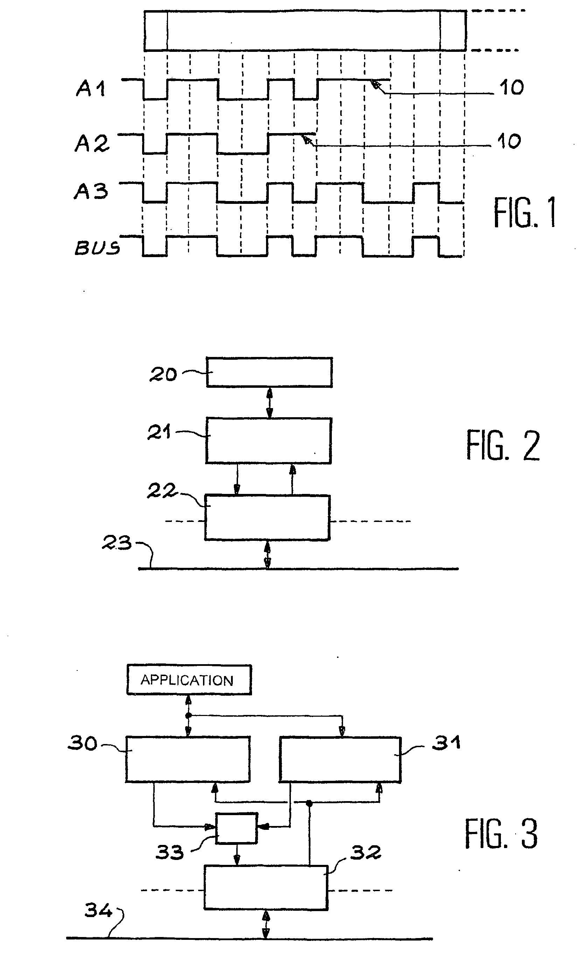

En effet, lors de la phase d'arbitrage, chaque émetteur compare le niveau du bit transmis sur le bus avec le niveau du bit qu'il est censé transmettre lui-même. Si ces niveaux sont identiques, le noeud continue d'émettre. Lorsqu'un niveau récessif (niveau logique '1') est envoyé et qu'un niveau dominant (niveau logique '0') est observé sur le bus, l'unité considérée perd l'arbitrage, doit se taire et ne plus envoyer aucun bit. Une nouvelle tentative de transmission du message a lieu dès la fin de la trame en cours et ce jusqu'à la réussite de la transmission. Ce principe d'arbitrage définit donc une priorité pour l'accès au bus ; l'unité dont le message possède la plus haute priorité (via le contenu binaire de son identificateur) gagne l'accès au bus et transmet son message. Dans l'exemple illustré sur la figure 1, les abonnés A1 et A2 perdent l'arbitrage en 10 ; ils n'ont donc pas la priorité face à l'abonné A3 qui, lui, gagne le bus et transmet son message.

Afin d'assurer une grande qualité et sécurité de transmission, de nombreux dispositifs de signalisation et de détection d'erreurs ont été mis au point, notamment le principe d'acquittement, le CRC et la notion de bit "stuffing", que l'on va considérer successivement :

Tous les récepteurs se doivent d'émettre un signal d'acquittement lorsqu'ils n'ont pas détecté d'erreur dans le message. Ils superposent donc un bit dominant au bit récessif déjà présent au niveau du bit dit "ACK slot" du champ d'acquittement. Dans le cas contraire, si le message est considéré comme non valide, le récepteur ne retourne pas d'acquittement. De plus, pour satisfaire le protocole CAN, il a pour obligation de signaler l'erreur en transmettant une trame d'erreur.

Pour protéger les informations qui transitent sur le bus, un CRC ("Cyclic Redundancy Code") est introduit dans la trame elle-même. Il s'agit d'un code qui est calculé par l'émetteur lors de l'émission et par le récepteur pendant la réception. Les deux résultats sont comparés et la non concordance implique une erreur que le récepteur signale automatiquement.

Les informations échangées par les abonnés sont numériques. Pour pouvoir transiter sur le bus, elles sont codées en NRZ (Non Return to Zero). Autrement dit, entre deux bits de même valeur il n'y a pas de retour à zéro. Le bit étant codé en NRZ, il se peut qu'un message particulier contienne beaucoup de bits de même valeur et puisse faire croire à une ou plusieurs des stations qu'il y a peut être une anomalie sur le réseau. La notion de bit "stuffing" consiste en l'insertion par l'émetteur, après cinq bits successifs de même valeur, d'un bit supplémentaire (qui sera éliminé par le récepteur). Ce bit de bourrage est un bit de valeur opposée aux cinq autres. Ce procédé permet de sécuriser le message lors de son transport sur le bus.

Toutes les informations véhiculées sur le bus sont envoyées sous forme de trames. Une trame est une succession de bits organisés en différents champs.

Il existe quatre sortes de trames :
- Trame de données ("Data Frame")
- Trame de requête ("Remote Frame")
- Trame d'erreur ("Error Frame")
- Trame de surcharge ("Overload Frame")

La trame de données est la trame qui transporte les données. Elle se compose de sept champs qui sont :
- Début de trame ("Start of Frame" ou SOF)
- Champ d'arbitrage ("Arbitration field")
- Champ de commande ("Control field")
- Champ de données ("Data field")
- Champ de CRC ("CRC Sequence")
- Champ d'acquittement ("ACKnowledgement field")
- Fin de trame ("End of Frame" ou EOF)
puis elle est suivie d'une huitième zone dite d'intertrame ("Interframe").

La transmission des données peut être affectée par des erreurs survenant au niveau du bus et perturbant la circulation des trames. Plusieurs types d'erreurs peuvent se produire :
- Au niveau couche physique :
   - bit entaché d'erreurs (parasité par exemple)
   - Erreur de "bit stuffing" : violation de la règle de "bit stuffing" entre le SOF et le CRC.
- Au niveau trame :
   - Erreurs d'acquittement : absence de bit dominant pendant le bit "ACK slot"
   - Erreurs de CRC : discordance entre la valeur du CRC calculée par le récepteur et celle envoyée par l'émetteur
- Au niveau structure de trame (informations non à leur place) :
   - Erreur de "CRC delimiter"
   - Erreur de "ACKnowledge delimiter"
   - Erreur de "end of frame"
   - Erreur de "error delimiter"
   - Erreur de "overload delimiter"

Dans tous ces cas de figures la présence d'erreurs est signalée par une trame d'erreur ("error frame") qui est générée sur le bus.

En envoyant une trame de requête, un noeud signale aux autres noeuds présents sur le réseau qu'il désire recevoir des données de leur part sous forme d'une trame de données correspondante. La trame de requête et la trame de données associée sont repérées par le même identificateur. En cas d'émission simultanée, une trame de données prévaut sur une trame de requête.

La trame de requête se compose de six champs qui sont :
- Début de trame ("Start of Frame" ou SOF)
- Champ d'arbitrage ("Arbitration field")
- Champ de commande ("Control field")
- Champ de CRC ("CRC Sequence")
- Champ d'acquittement ("ACKnowledgement field")
- Fin de trame ("End of Frame" ou EOF)
puis elle est aussi suivie de la zone dite d'intertrame ("Interframe").

La trame d'erreur se compose de deux champs :
- Champ des drapeaux d'erreur ("Error Flags") : constitué par la superposition des drapeaux d'erreurs auxquels ont contribuées les différentes stations présentes sur le bus. Ces drapeaux d'erreurs peuvent être de deux sortes suivant le type d'erreur (défini par la suite) :
   - six bits dominants dans le cas d'une erreur active.
   - six bits récessifs dans le cas d'une erreur passive.
- Délimiteur de champ : constitué de huit bits récessifs consécutifs.
Puis elle est suivie de la zone d'intertrame définie précédemment.

La trame de surcharge a pour but d'indiquer qu'une station est surchargée. Elle peut être émise lorsqu'un récepteur nécessite un certain temps pour accepter la prochaine trame (de données ou de requête), ou lors de la détection d'un bit dominant durant la phase d'intermission. Afin de ne pas bloquer le bus indéfiniment, seules deux trames de surcharge consécutives sont possibles. Cette trame ne comprend que deux champs :
- Champ des drapeaux de surcharge ("Overload Flags") : constitué de six bits dominants consécutifs.
- Délimiteur de champ : constitué de huit bits récessifs consécutifs.

Il existe de nombreux composants permettant de réaliser des solutions fonctionnant sous le protocole CAN et capables de véhiculer des trames sur différents média. On peut subdiviser les composants de bus CAN selon les quatre grandes classes de fonctionnalités suivantes :
- Les gestionnaires de protocole (contrôleur) : leur fonction est d'assurer la génération et le décodage du protocole. Ils sont généralement incapables de fonctionner seuls et doivent être pilotés par un microcontrôleur.
- Les microcontrôleurs ayant à bord des gestionnaires de protocole : réalisés afin de réduire le coût que peut représenter l'ensemble des deux composants (gestionnaire de protocole et microcontrôleur).
- Les interfaces de commande de ligne ("Drivers") : ils constituent la partie assurant la liaison entre le gestionnaire de protocole et le médium.
- Les circuits d'entrées/sorties de type SLIO ("Serial Link Input/Output") : ce sont des circuits très dépouillés, c'est à dire sans CPU à bord, ni interface microcontrôleur... Leur vocation est d'effectuer des tâches principalement d'entrées/sorties, soit numériques soit analogiques, et leur fonctionnement sur le bus n'est qu'en mode esclave (interrogeable).

Un tel bus CAN présente divers inconvénients.

Il présente tout d'abord une limitation théorique en débit/longueur. Le principe de fonctionnement d'arbitrage et d'acquittement nécessite la juxtaposition temporelle des bits des trames issues des différents abonnés.

De plus diverses limitations supplémentaires ont été constatées dans la pratique :
- Désadaptation d'impédance des circuits "drivers" en émission sur le bus (réflexion du signal),
- Variation de cette désadaptation liée aux multiples conditions de collisions sur le bus,
- Dégradation possible de la forme du signal liée aux charges capacitives ramenées, dans le domaine aéronautique, par les protections foudres. Il s'ensuit une dégradation de la qualité de la transmission sur la ligne diminuant les performances théoriques pour une utilisation débit/longueur aux limites.
   Ce type de bus est donc plutôt adapté pour des utilisations de type "Marché automobile", répondant à des contraintes de communication non sévères :
   - bus de quelques mètres
   - débits de 250 Kbits/s,
   - pas de circuits de protection EMI+foudre,
   et qui n'est donc pas sensible aux problèmes de désadaptation liés aux caractéristiques propres des composants du commerce.

L'invention a pour objectif d'étendre le domaine d'utilisation d'un tel bus en milieu avionique en améliorant les performances de celui-ci :
- maîtrise d'impédance de ligne (un seul abonné actif),
- longueur du bus limitée uniquement par l'atténuation du support et de la connectique,
- débit possible de 1 Mbits/s indépendamment de la longueur du bus.

Le document référencé [3] décrit un interface dit « ASI » permettant de coupler des capteurs binaires et des actuateurs à un contrôleur à base de microprocesseur. Le coeur de cet interface est une puce esclave (« slave chip ») avec laquelle les capteurs/actuateurs sont couplés numériquement à un câble ASI. Un interface ASI peut transmettre des données dans les deux directions : du contrôleur vers le périphérique ou du périphérique vers le contrôleur. Dans un procédé d'accès, une station maître et plusieurs stations esclaves peuvent, à tout moment, prendre part à une communication. La station maître envoie un message, qui contient une adresse de station esclave, et la station esclave ainsi adressée répond dans un temps déterminé.

### Exposé de l'intention

La présente invention propose un procédé de gestion d'un bus de terrain déterministe assurant une communication de messages entre plusieurs stations abonnés comprenant chacune au moins un contrôleur chargé d'assurer la génération et le décodage du protocole de communication, dans lequel on valide les émissions sur le bus d'une des stations abonnés et que l'on inhibe les émissions sur le bus de autres stations pour un principe d'échange dans lequel à tout moment une seule station abonnée est active, les autres étant passives, **caractérisé en ce qu**'il assure les fonctions suivantes :
- inhibitions des émissions sur le bus quand l'abonné est en mode passif (en réception uniquement),
   - acquittement automatique pour une émission par l'abonné (acquittement local),
   - suppression de l'émission de l'acquittement sur le bus à la fin d'une trame en réception,
   - suppression de l'émission de trames d'erreurs sur le bus quand l'abonné est en réception,
- ajout de mécanismes de sécurisation,
   - surveillance de la configuration du niveau de sortie (TX) du contrôleur,
   - fenêtre d'autorisation d'émission des réponses gérée en local au niveau des abonnés en mode passif,
   - isolation de l'abonné vis-à-vis du bus s'il est défaillant.

Les termes "actif" et "passif" s'entendent, alors, au sens électrique sur le bus.

Avantageusement ce procédé n'utilise pas de principe de juxtaposition de bits.

Dans ce procédé on peut utiliser des mécanismes de :
- surveillance du niveau de sortie de chaque contrôleur,
- isolation des stations abonnés vis-à-vis du bus si celles-ci sont défaillantes,
- multiéchantillonnage du bit supérieur à 3 (qui est celui du bus CAN standard).

La présente invention propose également un bus de terrain déterministe, comprenant des contrôleurs, des circuits "drivers" de ligne et une ligne proprement dite, assurant une communication de messages entre plusieurs stations abonnés, qui comprend un dispositif de gestion comportant des moyens de validation des émissions sur le bus d'une des stations abonnés et des moyens d'inhibition des émissions sur le bus des autres stations, pour un principe d'échange dans lequel à tout moment une seule station abonnée est active, les autres étant passives, **caractérisé en ce que** chaque station abonné comprend des moyens logiques disposés entre un contrôleur et le circuit "driver" de bus correspondant, réalisant des mécanismes de sécurisation assurant les fonctions suivantes :
- inhibitions des émissions sur le bus quand l'abonné est en mode passif (en réception uniquement),
   - acquittement automatique pour une émission par l'abonné (acquittement local),
   - suppression de l'émission de l'acquittement sur le bus à la fin d'une trame en réception,
   - suppression de l'émission de trames d'erreurs sur le bus quand l'abonné est en réception, et
- ajout de mécanismes de sécurisation,
   - une surveillance de la configuration du niveau de sortie du contrôleur,
   - une utilisation d'une fenêtre d'autorisation d'émission des réponses gérée en local au niveau des stations abonnés esclaves,
   - une isolation des stations abonnés vis-à-vis du bus si celui-ci est défaillant.

Un tel bus, en comparaison au bus CAN, présente les caractéristiques avantageuses suivantes :
- suppression des juxtapositions de bits :
   - plus d'acquittement
   - plus d'arbitrage
- Maintien des trames fonctionnelles :
   - trames de données
   - trames de requêtes
- Suppression des trames non fonctionnelles :
   - plus de trames d'erreurs émises par un abonné en réception
   - plus de trames de surcharge émises sur le bus
- Format de trames inchangées :
   - utilisation des outils d'analyse du commerce
- Fonctionnalités de sécurisation inchangées :
   - contrôle des données avec CRC
   - codage de bits avec les bits de "stuff"
- Support physique inchangé :
   - comportement physique éprouvé
- Performance débit/longueur/nombre d'abonnés augmentée.

Dans un premier mode de réalisation chaque station abonné comprend deux contrôleurs associés.
Ce premier mode présente les caractéristiques avantageuses suivantes :
- auto-contrôle des données émises sur le bus
- acquittement local automatique
- mise en oeuvre simple avec des composants CAN du marché offrant la possibilité de passer en mode d'écoute seulement.

Dans un second mode de réalisation chaque station abonné comprend des moyens logiques disposés entre un contrôleur et le driver bus, réalisant des mécanismes de sécurisation assurant :
- une surveillance de la configuration du niveau de sortie du contrôleur,
- une utilisation d'une fenêtre d'autorisation d'émission des réponses gérée en local au niveau des stations abonnés esclaves,
- une isolation des stations abonnés vis-à-vis du bus si celles-ci sont défaillantes.

Ce second mode présente les caractéristiques avantageuses suivantes :
- auto-contrôle des données émises sur le bus,
- acquittement local automatique,
- utilisation de tous les types de contrôleurs CAN du commerce,
- isolation des abonnés défaillants.

Dans un troisième mode de réalisation chaque station abonné comprend un composant dédié réalisant les fonctions de :
- ajout de mécanismes de sécurisation :
   - utilisation d'une fenêtre d'autorisation d'émission des réponses gérée en local au niveau des stations abonnés esclaves,
   - isolation des stations abonnés vis-à-vis du bus si celui-ci est défaillant,
- multiéchantillonnage du bit supérieur à 3 (qui est celui du bus CAN standard).

Ce troisième mode présente les caractéristiques avantageuses suivantes :
- architecture matérielle réduite/faible coût,
- isolation des abonnés défaillants,
- amélioration des synchronisations bits,
- meilleure immunité face aux agressions externes.

Un tel bus de terrain déterministe peut avantageusement être utilisé dans le domaine avionique.

L'invention permet de répondre à des besoins de communication contraignants, à savoir :
- un débit élevé (à partir de quelques centaines de Kbits/s),
- une grande longueur de bus (dépassant les 100 m) ,
- un déterminisme garanti (parfait contrôle du moment où la donnée doit être transmise).

Une telle architecture permet de s'affranchir des contraintes du bus CAN évoquées plus haut.

Dans la mesure où seul un abonné est actif sur le bus, l'arbitrage et l'acquittement multiple avec les autres abonnés ne sont plus nécessaires. Les limites de longueur, liées à la nature du support et aux performances des composants, sont tout à fait compatibles avec les exigences du milieu aéronautique. Par exemple, dans le cas d'une liaison électrique on peut utiliser des circuits "drivers" de type CAN ou des circuits "drivers" de type RS 485, dans le cas d'une liaison optique on peut utiliser des composants "bas de gamme". Dans ce dernier cas les circuits de protection foudre - EMI ne sont plus nécessaires :
- la résolution des problèmes liés à l'adaptation des abonnés au bus est nettement simplifiée.
- d'un point de vue déterministe, dans le premier mode de réalisation un contrôleur "tandem" de réseau est maître des échanges au sein de son réseau, il joue alors un rôle de maître de bus en répartissant des temps de parole aux autres abonnés.
- Le matériel utilisé peut être exclusivement composé des composants de bus CAN actuellement utilisés et donc, bénéficier des avantages coûts et multi-source.
- les mécanismes de sécurisation des messages propres au protocole classique de terrain déterministe, restent actifs (bits de "stuffing", CRC, acquittement,...).

### Brève description des dessins

La figure 1 illustre le principe d'arbitrage d'un bus CAN.

La figure 2 illustre l'architecture générale d'un abonné CAN classique.

La figure 3 illustre un premier mode de réalisation de l'invention.

Les figures 4 et 5 illustrent un second mode de réalisation de l'invention.

La figure 6 illustre un troisième mode de réalisation de l'invention.

### Exposé détaillé de modes de réalisation

L'invention concerne un bus de terrain déterministe, comprenant des contrôleurs, des circuits "drivers" de ligne et une ligne proprement dite, assurant une communication de messages entre plusieurs stations abonnés, et qui comprend un dispositif de gestion comportant des moyens de validation des émissions sur le bus d'une des stations abonnés et des moyens d'inhibition des émissions sur le bus des autres stations, pour un principe d'échange dans lequel à tout moment une seule station abonnée est active, les autres étant passives. Selon le procédé de gestion de ce bus, on utilise les services offerts par le protocole de communication CAN mais on cesse d'utiliser le principe de base de ce protocole (gestion de collision et acquittement), tout en conservant les contrôleurs de bus.

Dans un premier mode de réalisation de l'invention tout abonné au bus est équipé de deux contrôleurs de bus associés, en "tandem".

Comme illustré sur la figure 2, l'architecture générale d'un abonné CAN classique est basée sur un micro-contrôleur 20 qui accomplit le traitement applicatif, un contrôleur de protocole 21 qui assure la gestion du bus conformément au protocole CAN et une interface de ligne 22 qui réalise la mise en forme du signal électrique suivant les recommandations des normes référencées [1] et [2] ; le bus CAN étant référencé 23.

Par contre dans le premier mode de réalisation, comme illustré sur la figure 3, l'architecture générale d'un abonné demande la mise en oeuvre de deux contrôleurs de protocole 30, 31. Pour éviter la duplication des interfaces de lignes et des connections au bus, il est utilisé une interface de ligne 31 commune aux deux contrôleurs, le signal de transmission passe par une porte logique élémentaire 33 (porte ET), ceci afin de gérer l'accès en émission, le bouclage étant assuré par l'interface de ligne. Le bus est référencé 34.

A un instant donné, on n'a qu'un contrôleur émetteur sur le bus, les autres étant à l'écoute. Ce contrôleur émetteur joue le rôle de contrôleur de bus gérant les échanges. Il travaille en mode "normal" lors de l'émission et les autres contrôleurs en mode "passif" en réception. L'utilisation de deux contrôleurs en "tandem" permet de vérifier immédiatement la bonne émission des données sur le bus, en confirmant toute émission bien émise par un acquittement. A l'issue de l'émission d'une donnée sur le bus, le contrôleur de bus revient en mode passif.

A l'issue de cette émission, deux cas peuvent se présenter :
- l'émission n'a qu'une vocation d'information vis-à-vis des autres abonnés (diffusion de type "broadcast"),
- l'émission est en fait une interrogation vers un seul abonné, qui nécessite une réponse de celui-ci.

Dans le cas où l'émission est une interrogation vers un seul abonné qui nécessite une réponse de celui-ci, cet abonné n'est pas alors en mesure de répondre (il est en mode passif). A plus haut niveau, au niveau applicatif, il est vérifié que le message lui est bien adressé. Dans ce cas l'application reconfigure son contrôleur en mode "normal", uniquement pendant le temps de la réponse. Ce contrôleur de réponse est lui aussi en "tandem" ce qui permet de vérifier la bonne émission de données sur le bus. Le contrôleur de bus est alors en mesure de recevoir la réponse, ce qui lui permet ensuite de requestionner un autre abonné ou d'informer les autres abonnés.

Dans ce mode de réalisation, il n'y a pas nécessité d'arbitrage pour gérer les conflits, car ceux-ci n'existent plus. Le fonctionnement est en mode question/réponse. Les coïncidences temporelles des bits d'acquittement sont inutiles (acquittement géré localement par les contrôleurs "en tandem").

Dans un second mode de réalisation on garde les avantages du premier mode de réalisation (performances liées au protocole maître/esclave), mais le second contrôleur est remplacé par une logique dédiée qui s'insère entre le contrôleur et le circuit "driver" en assurant les même fonctions :
- inhibitions des émissions sur le bus quand l'abonné est en mode passif (en réception uniquement),
   - acquittement automatique pour une émission par l'abonné (acquittement local),
   - suppression de l'émission de l'acquittement sur le bus à la fin d'une trame en réception,
   - suppression de l'émission de trames d'erreurs sur le bus quand l'abonné est en réception,
   avec en plus :
- ajout de mécanismes de sécurisation,
   - surveillance de la configuration du niveau de sortie (TX) du contrôleur,
   - fenêtre d'autorisation d'émission des réponses gérée en local au niveau des abonnés esclaves,
   - isolation de l'abonné vis-à-vis du bus s'il est défaillant.

Le second contrôleur du premier mode de réalisation est donc supprimé et on utilise un premier contrôleur quelconque. Le temps de retournement mode passif <=> mode actif n'est plus à prendre en compte. La couche applicative ne gère plus le second contrôleur. Il y a limitation des perturbations sur le bus suite à une défaillance d'un abonné.

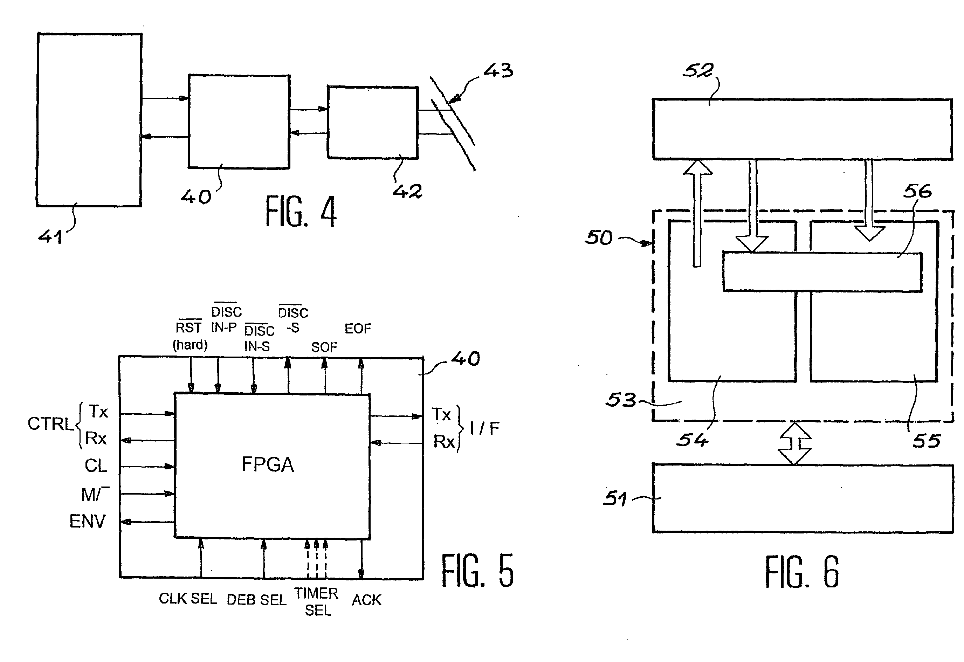

La logique dédiée est constituée d'un composant additionnel : un gestionnaire de type MS-CAN ou "maître-esclave" 40. Comme illustré sur la figure 4, ce gestionnaire 40 est un circuit programmable autonome, par exemple de type FPGA, qui est inséré entre le contrôleur 41 et le circuit "driver" ou pilote 42 ("transceiver") du bus CAN 43. Il contrôle l'accès au bus du maître et des esclaves pour ne donner le droit d'écriture qu'à un seul à la fois. Un tel principe évite les collisions sur le bus mais interdit les acquittements.

Comme le protocole CAN impose au contrôleur 41 la réémission automatique d'une trame non acquittée, le gestionnaire 40 doit fournir localement le bit d'acquittement au contrôleur 41.

Ce gestionnaire 40 est défini sur la base du synoptique fonctionnel illustré sur la figure 5, dont les entrées ou sorties ont les significations suivantes :
- RST : "reset"
- DISC IN-P : commande de déconnexion du contrôleur de l'interface de ligne sur impulsion
- DISC IN-S : commande de déconnexion du contrôleur de l'interface de ligne sur état
- DISC-S : état du gestionnaire (déconnexion ou en ligne)
- SOF : "start of frame" (bit de SOF)
- EOF : "end of frame" (dernier bit du champ EOF)
- ACK : acquittement (bit d'ACK)
- ENV : enveloppe de la trame, du SOF jusqu'au dernier bit récessif de la trame (EOF)
- CLK : horloge du contrôleur
- CLK SEL : sélection de la fréquence d'horloge : 16 ou 24 MHz (SJA1000 à 16 ou 24 MHz, Intel 82527 à 16 MHz)
- TIMER SEL : sélection des délais de réponse autorisés : "timers" T et T' (2 x 8 bits)
- DEB SEL : sélection du débit (500 Kbps ou 1 Mbps)
- Tx,Rx vers I/F : entrée/sortie vers interface de ligne électrique (par exemple: 82C251)
- Tx,Rx contrôleur (CTRL) : sortie Tx, entrée Rx du contrôleur
- M/S : entrée de configuration de fonctionnement en mode "maître" ou en mode "esclave".

La logique dédiée a pour fonction de permettre un mode de fonctionnement de type maître/esclave jusqu'au niveau le plus bas des couches tout en gardant la structure des trames CAN. Le fait qu'il ne doit y avoir qu'un seul abonné actif sur le bus à un instant donné implique qu'il n'existe plus d'arbitrages et d'acquittements multiples entre abonnés. Un abonné maître (seul ou en redondance d'ordre deux sur le bus) se met en mode actif pour envoyer une requête sur le bus, il émet vers tous les abonnés esclaves, qui sont passifs (ils n'acquittent pas cette trame). Cette trame est validée et acquittée localement par la logique dédiée au niveau de l'abonné maître et s'adresse à un abonné esclave. L'abonné maître se met en mode passif le temps de la réponse. L'abonné esclave concerné se met en mode actif pour répondre (dans une fenêtre de temps autorisée) puis se met en mode passif à nouveau. Cette réponse est aussi validée et acquittée localement par la logique dédiée au niveau de l'abonné esclave, elle est reçue par l'abonné maître.

Dans un troisième mode de réalisation on utilise un composant dédié qui permet de réaliser les fonctions suivantes :
- inhibition des émissions sur le bus quand l'abonné est en mode passif,
- ajout de mécanismes de sécurisation ;
   - utilisation d'une fenêtre d'autorisation d'émission des réponses gérées en local au niveau des stations abonnés esclaves,
   - isolation des stations abonnés vis-à-vis du bus si celui-ci est défaillant,
- multiéchantillonnage du bit.

Le composant dédié (ou contrôleur dédié) vient en remplacement d'un contrôleur classique CAN.

Ce composant dédié 50 est destiné à faire l'interface entre la couche applicative 51 et le support physique du bus 52 par l'intermédiaire du "driver" de ligne.

Il doit supporter les quatre fonctions suivantes :
- émission 54 : transfert des données applicatives vers le bus sous forme de trames,
- réception 55 : récupération des trames sur le bus pour extraire les données applicatives,
- paramétrage 53 : interface de dialogue avec la couche applicative pour le paramétrage du contrôleur,
- surveillance 56 : vérification du bon fonctionnement de la couche physique.

L'exécution de ces fonctions peut se dérouler en parallèle ou séquentiellement. Le diagramme de la figure 6 illustre les différents cas de figure :
- la fonction paramétrage 53, doit être active et disponible en permanence vis-à-vis de la couche applicative 51 quel que soit l'état d'activation des autres fonctions.
- L'activation des fonctions émission 54 et réception 55 est exclusive (soit le contrôleur émet, soit il reçoit).
- la fonction surveillance 56 est activée à la demande des couches émission (pour vérifier la trame émise) et réception pour vérifier la qualité de la trame reçue.

Le composant dédié peut être réalisé sous la forme d'un composant spécifique ASIC ("Application specific integrated circuit") ou d'un contrôleur micro-programmé.

### REFERENCES

[1] Norme ISO 11519
[2] Norme ISO 11898
[3] "ASI in Überblick", Kriesel W. ; Madelung O.W. ("Sensor-Aktuotor-Schnittstelle für Steuerungen", 1994, pages 11-60, XP 002062938)

## Revendications

1. Procédé de gestion d'un bus de terrain déterministe assurant une communication de messages entre plusieurs stations abonnés comprenant chacune au moins un contrôleur chargé d'assurer la génération et le décodage du protocole de communication, dans lequel on valide les émissions sur le bus d'une des stations abonnés et on inhibe les émissions sur le bus des autres stations pour un principe d'échange dans lequel à tout moment une seule station abonnée est active, les autres étant passives, **caractérisé en ce qu'**il assure les fonctions suivantes :
- inhibitions des émissions sur le bus quand l'abonné est en mode passif,
• acquittement automatique pour une émission par l'abonné,
• suppression de l'émission de l'acquittement sur le bus à la fin d'une trame en réception,
• suppression de l'émission de trames d'erreurs sur le bus quand l'abonné est en réception,
- ajout de mécanismes de sécurisation,
• surveillance de la configuration du niveau de sortie (TX) du contrôleur,
• fenêtre d'autorisation d'émission des réponses gérée en local au niveau des abonnés en mode passif,
• isolation de l'abonné vis-à-vis du bus s'il est défaillant.

2. Procédé selon la revendication 1, dans lequel on utilise un mécanisme de surveillance du niveau de sortie de chaque contrôleur.

3. Procédé selon la revendication 1, dans lequel on isole des stations abonnés vis-à-vis du bus si celles-ci sont défaillantes.

4. Procédé selon la revendication 1, dans lequel on multiéchantillonne chaque bit au delà de trois.

5. Bus de terrain déterministe, comprenant une pluralité d'abonnés, des contrôleurs, des circuits "drivers" de ligne et une ligne, assurant une communication de messages entre plusieurs stations abonnés, qui comprend un dispositif de gestion comportant des moyens de validation des émissions sur le bus d'une des stations abonnés et des moyens d'inhibition des émissions sur le bus des autres stations, pour un principe d'échange dans lequel à tout moment une seule station abonnée est active, les autres étant passives, **caractérisé en ce que** chaque station abonné comprend des moyens logiques disposés entre un contrôleur et le circuit "driver" de bus correspondant, réalisant des mécanismes de sécurisation assurant les fonctions suivantes :
- inhibitions des émissions sur le bus quand l'abonné est en mode passif,
• acquittement automatique pour une émission par l'abonné,
• suppression de l'émission de l'acquittement sur le bus à la fin d'une trame en réception,
• suppression de l'émission de trames d'erreurs sur le bus quand l'abonné est en réception, et
- ajout de mécanismes de sécurisation,
• une surveillance de la configuration du niveau de sortie du contrôleur,
• une utilisation d'une fenêtre d'autorisation d'émission des réponses gérée en local au niveau des stations abonnés en mode passif,
• une isolation des stations abonnés vis-à-vis du bus si celui-ci est défaillant.

6. Bus selon la revendication 5, dans lequel chaque station abonné comprend deux contrôleurs associés.

7. Bus selon la revendication 6, dans lequel chaque station abonné comprend un composant dédié réalisant les fonctions de :
- mécanismes de sécurisation assurant :
• une utilisation d'une fenêtre d'autorisation d'émission des réponses gérée en local au niveau des stations abonnés esclaves,
• une isolation des stations abonnés vis-à-vis du bus si celui-ci est défaillant,
- multiéchantillonnage du bit.

8. Utilisation du bus de terrain déterministe, selon l'une quelconque des revendications 5 à 7, dans le domaine avionique.

## Claims

1. Method to manage a deterministic field bus ensuring communication of messages between several subscriber stations each comprising at least one controller in charge of ensuring the generation and decoding of the communication protocol, wherein transmissions are enabled on the bus of one of the subscriber stations and transmissions on the bus of the other stations are inhibited on an exchange principle in which, at any time, only one subscriber station is active, the others being passive, **characterized in that** it ensures the following functions:
- inhibiting transmissions on the bus when the subscriber is in passive mode,
• automatic acknowledgment for a transmission by the subscriber,
• deletion of acknowledgement transmission on the bus at the end of a receive frame,
• deletion of the transmission of error frames on the bus when the subscriber is in receive mode,
- adding securitizing mechanisms:
• monitoring the configuration of the output level (TX) of the controller,
• window authorizing transmission of responses, managed locally at subscriber level in passive mode,
• isolation of the subscriber from the bus in the event of a bus fault.

2. Method according to claim 1, wherein a monitoring mechanism is used for the output level of each controller.

3. Method according to claim 1, wherein the subscriber stations are isolated from the bus if these stations are faulty.

4. Method according to claim 1, wherein each bit beyond three is multi-sampled.

5. Deterministic field bus comprising a plurality of subscribers, controllers, line driver circuits and a line, ensuring communication of messages between several subscriber stations, which comprises a management device containing means to enable transmissions on the bus of one of the subscriber stations and means to inhibit transmissions on the bus of the other stations, on an exchange principle in which, at any time, only one subscriber station is active, the others being passive, **characterized in that** each subscriber station comprises logic means arranged between a controller and the corresponding bus driver circuit, achieving securitizing mechanisms to ensure the following functions:
- inhibiting transmissions on the bus when the subscriber is in passive mode,
• automatic acknowledgment for a transmission by the subscriber,
• deletion of acknowledgement transmission on the bus at the end of a receive frame,
• deletion of the transmission of error frames on the bus when the subscriber is in receive mode, and
- adding securitizing mechanisms:
• monitoring the configuration of the output level (TX) of the controller,
• use of a window authorizing transmission of responses, managed locally at subscriber level in passive mode,
• isolation of subscriber stations from the bus in the event of a bus fault.

6. Bus according to claim 5, wherein each subscriber station comprises two associated controllers.

7. Bus according to claim 6, wherein each subscriber station comprises a dedicated component performing the functions of:
- securitization mechanisms ensuring:
• use of a window authorizing the transmission of responses, managed locally at slave subscriber stations,
• isolation of the subscriber stations from the bus in the event of a bus fault,
- multi-sampling of the bit.

8. Use of the deterministic field bus according to any of claims 5 to 7 in the area of avionics.

## Patentansprüche

1. Verfahren zum Betrieb eines deterministischen Feldbusses, der die Nachrichtenkommunikation zwischen mehreren angeschlossenen Stationen sicherstellt, die jeweils mindestens eine Steuereinheit umfassen, die mit der Erzeugung und Dekodierung des Kommunikationsprotokolls beauftragt ist, indem nach einem Austauschprinzip, nachdem jedes Mal wenn eine einzige angeschlossene Station aktiv ist, die anderen passiv sind, die Sendungen von einer der angeschlossenen Stationen über den Bus validiert bzw. zugelassen und die Sendungen der anderen Stationen über den Bus gehemmt werden, wobei das Verfahren **dadurch gekennzeichnet ist, dass** es die folgenden Funktionen sicherstellt:
- Hemmungen von Sendungen über den Bus, wenn sich der Anschluss im passiven Modus befindet,
• automatische Quittierung für eine Sendung durch den Anschluss,
• Unterdrückung der Sendung der Quittierung über den Bus am Ende eines Frames bei Empfang,
• Unterdrückung der Sendung von Fehlerframes über den Bus, wenn der Anschluss auf Empfang steht,
- zusätzliche Sicherungsmechanismen,
• Überwachung der Konfiguration der Ausgangsebene (TX) der Steuereinheit,
• Fenster zur Autorisierung der Sendung von Antworten, das lokal auf der Ebene der Anschlüsse im passiven Modus betrieben wird,
• Isolierung eines Anschlusses gegenüber einem Bus, wenn dieser ausfällt.

2. Verfahren nach Anspruch 1, wobei ein Überwachungsmechanismus der Ausgangsebene jeder Steuereinheit verwendet wird.

3. Verfahren nach Anspruch 1, wobei angeschlossene Stationen gegenüber dem Bus isoliert werden, wenn diese ausfallen.

4. Verfahren nach Anspruch 1, wobei bei jedem Bit jenseits von 3 ein Multisampling durchgeführt wird.

5. Deterministischer Feldbus, der mehrere Anschlüsse, Steuereinheiten, "Treiber"-Schaltungen für eine Leitung und eine Leitung umfasst, der die Nachrichtenkommunikation zwischen mehreren angeschlossenen Stationen sicherstellt, wobei dieser eine Betriebsvorrichtung umfasst, die Mittel zur Validierung bzw. Zulassung von Sendungen einer der angeschlossenen Stationen über den Bus und Mittel zur Hemmung von Sendungen der anderen Stationen über den Bus nach einem Austauschprinzip, bei dem jedes Mal, wenn eine einzige angeschlossene Station aktiv ist, die anderen Stationen passiv sind, umfasst,
**dadurch gekennzeichnet, dass** jede angeschlossene Station logische Mittel umfasst, die zwischen einer Steuereinheit und der "Treiber"-Schaltung des entsprechenden Busses angebracht sind, die Sicherungsmechanismen realisieren, die die folgenden Funktionen sicherstellen:
- Hemmungen von Sendungen über den Bus, wenn sich der Anschluss im passiven Modus befindet,
• automatische Quittierung für eine Sendung durch den Anschluss,
• Unterdrückung der Sendung der Quittierung über den Bus am Ende eines Frames bei Empfang,
• Unterdrückung der Sendung von Fehlerframes über den Bus, wenn der Anschluss auf Empfang steht, und
- zusätzliche Sicherungsmechanismen,
• Überwachung der Konfiguration der Ausgangsebene der Steuereinheit,
• Die Verwendung eines Fensters zur Autorisierung der Sendung von Antworten, das lokal auf der Ebene der angeschlossenen Stationen im passiven Modus betrieben wird,
• Die Isolierung von angeschlossenen Stationen gegenüber dem Bus, wenn dieser ausfällt.

6. Bus nach Anspruch 5, wobei jede angeschlossene Station zwei damit verbundene Steuereinheiten umfasst.

7. Bus nach Anspruch 6, wobei jede angeschlossene Station eine Komponente umfasst, die zur Realisierung der folgenden Funktionen dient:
- Sicherungsmechanismen, die sicherstellen:
• Die Verwendung eines Fensters zur Autorisierung der Sendung von Antworten, die lokal auf der Ebene der angeschlossenen Slave-Stationen betrieben wird,
• Die Isolierung von angeschlossenen Stationen gegenüber dem Bus, wenn dieser ausfällt,
- Bit-Multisampling.

8. Verwendung des deterministischen Feldbusses nach einem der Ansprüche 5 bis 7 auf dem Gebiet der Luftfahrt.
